# EUROPÄISCHE PATENTSCHRIFT

(11) **EP 1 688 575 B1**
(45) Veröffentlichungstag und Bekanntmachung des Hinweises auf die Patenterteilung: **07.05.2014**
(21) Anmeldenummer: 05024046.4
(22) Anmeldetag: 04.11.2005
(51) Int. Cl.: E05F 15/12, F16D 27/00, F16D 27/112, F16D 55/28, F16D 67/02

(54) **Antrieb**
Drive unit
Unité d'entraînement

(30) Priorität: 08.02.2005 DE 102005005648
(43) Veröffentlichungstag der Anmeldung: 09.08.2006
(73) Patentinhaber: Stabilus GmbH, 56070 Koblenz (DE)
(72) Erfinder: Frieb-Preis, Timo, 56294 Münstermaifeld (DE); Kleinmann, Michael, 56581 Melsbach (DE)
(74) Vertreter: Klein, Thomas

(56) Entgegenhaltungen:
- DE-A1- 10 225 580
- GB-A- 789 938
- GB-A- 1 106 136
- US-A- 2 612 248
- US-A1- 2004 046 418

## Beschreibung

Die Erfindung bezieht sich auf einen Antrieb zum Verschwenken einer an einer Karosserie eines Fahrzeugs um eine Schwenkachse schwenkbar angeordneten Klappe, mit einem reversierbar ansteuerbaren Antriebsmotor, durch den über einen Antriebsstrang ein Antriebsrad einer Schwenkvorrichtung drehbar antreibbar ist, von der die Klappe schwenkbar ist, wobei in dem Antriebsstrang eine Kupplung zum Unterbrechen des Antriebsstrangs und in Antriebsrichtung hinter der Kupplung eine Bremse zum Bremsen des hinter der Kupplung befindlichen Teils des Antriebsstrangs angeordnet ist und wobei von dem Antriebsmotor ein Rotor um eine Drehachse drehbar antreibbar ist, mit einer axial zur Drehachse angeordneten, bestrombaren Spule, von der ein axiales Magnetfeld erzeugbar ist, mit einem axial zu Rotor und Spule bewegbar angeordneten, von dem Magnetfeld beeinflußbaren Anker, der drehfest mit dem Antriebsrad verbunden ist, wobei der Anker durch das Magnetfeld eine form- und/oder reibschlüssige Verbindung zwischen Rotor und Anker erzeugend in Anlage an den Rotor bewegbar ist.

Bei einem derartigen bekannten Antrieb wird von einem Elektromotor eine Schnecke drehend angetrieben, die über ein Schneckenrad eine Eingangswelle einer Kupplung antreibt. Die Ausgangswelle der Kupplung treibt wiederum über ein Ritzel ein Zahnrad einer Antriebsrolle einer Schwenkvorrichtung an, von der die Klappe schwenkbar ist.

Aus der US 2004/046418 A1 sowie der DE 102 25 580 A1 ist ein Antrieb der eingangs genannten Art bekannt

Aus der GB 789 938 A ist eine magnetisch arbeitende Reibungsbremse oder Kupplung bekannt, die einen feststehenden Elektromagneten aufweist, der bei Bestromung ein radiales Magnetfeld erzeugt. Axial dem Elektromagneten gegenüberliegend ist ein axialverschiebbarer ferromagnetischer Flansch angeordnet, der einen ebenfalls radial magnetisierten Permanent-Ringmagneten aufweist.

Aufgabe der Erfindung ist es einen Antrieb der eingangs genannten Art zu schaffen, der einfach mit geringer Baugröße und mit geringem axialem Aufbau aufgebaut ist und bei dessen Nichtbestromung die Klappe in der jeweils eingenommenen Stellung gehalten wird.

Diese Aufgabe wird erfindungsgemäß dadurch gelöst, daß der Anker ein axial magnetisierter permanentmagnetischer Anker ist.

Durch diese Ausbildung ist der Antrieb mit wenigen Bauteilen und nur geringen Bauraum benötigend aufgebaut und bei nicht bestromter Spule wird die Klappe in ihrer jeweils eingenommenen Stellung gehalten.

Da eine Bestromung der Spule nur während einer Verstellung der Klappe erfolgt, ist der Energiebedarf sehr gering.

Weiterhin sind auf einfache Weise drei Zustände des Antriebs einstellbar, nämlich motorische Verstellung, Halten in der eingenommenen Stellung und manuelle Verstellung.

Der Anker kann durch das Magnetfeld entgegen einer Kraft in Anlage an den Rotor bewegbar sein, wodurch eine motorische Bewegung der Klappe durch den Antriebsmotor möglich ist.

Besitzt der Verlauf der Kraft in seinem mittleren Bereich einen stufigen Anstieg und erfolgt eine nur etwa 50 %ige Bestromung, so ist die Klappe frei manuell bewegbar.

Die Kraft kann in einfacher Weise die Kraft einer oder mehrerer Federn, insbesondere einer oder mehrerer Druckfedern sein.

Sind dabei die Druckfedern Tellerfedern, so wird eine geringe Baugröße erreicht.

Es ist aber auch möglich und bei einem stufigen Anstieg des Verlaufs der Kraft von Vorteil, wenn die Druckfedern Schraubendruckfedern sind.

Der Anker kann aus einem Träger aus nicht ferromagnetischen Werkstoffs bestehen, in den Permanentmagnete eingesetzt sind.

Weiterhin kann der Rotor aus einem ferromagnetischen Werkstoff bestehen und der Anker eine Anziehkraft zum Rotor besitzen.

Zu einem einfachen Aufbau geringer Größe bei gleichzeitiger Möglichkeit drei Stellungen einnehmen zu können, kann axial auf der dem Rotor abgewandten Seite des Ankers ein feststehendes Bauteil aus einem ferromagnetischen Werkstoff angeordnet sein, gegen das der Anker eine form- und/oder reibschlüssige Verbindung zwischen dem feststehenden Bauteil und dem Anker erzeugend in Anlage bewegbar ist, wobei der Anker eine Anziehkraft zu dem feststehenden Bauteil besitzt.

Um eine freie manuelle Betätigung der Klappe zu ermöglichen kann der Anker von einer der ersten Kraft entsprechenden entgegengerichteten zweiten Kraft beaufschlagt sein, wobei die zweite Kraft in einfacher Weise die Kraft einer oder mehrerer Federn, insbesondere eine oder mehrerer Druckfedern ist, die Tellerfedern oder Schraubendruckfedern sein können.

Ist der Antriebsmotor ein Elektromotor, so ist auch dieser nur zu einer Klappenverstellung zu bestromen, wodurch der Energiebedarf gering gehalten wird.

Der Antriebsmotor kann zur freien manuellen Betätigung der Klappe ein nicht selbsthemmender Antriebsmotor sein.

Ausführungsbeispiele der Erfindung sind in der Zeichnung dargestellt und werden im folgenden näher beschrieben. Es zeigen
- Figur 1: ein erstes Ausführungsbeispiel eines Antriebs im Querschnitt
- Figur 2: ein zweites Ausführungsbeispiel eines Antriebs im Querschnitt
- Figur 3: ein drittes Ausführungsbeispiel eines Antriebs im Querschnitt
- Figur 4: ein viertes Ausführungsbeispiel eines Antriebs im Querschnitt.

Die in den Figuren dargestellten Antriebe besitzen eine von einem nicht dargestellten Elektromotor um eine Drehachse 1 drehbar antreibbaren Rotor 2 mit einer sich quer zur Drehachse 1 erstreckenden Kupplungsfläche 3.

Koaxial zur Drehachse 1 ist ein Anker 4, 4', 4", 4"' angeordnet, der eine der ersten Kupplungsfläche 3 gegenüberliegende zweite Kupplungsfläche 5 aufweist.

Der Anker 4, 4', 4", 4'" ist axial bewegbar angeordnet und weist auf seiner dem Rotor 2 abgewandten Seite eine Antriebswelle 6 auf, durch die ein nicht dargestelltes Antriebsrad einer Schwenkvorrichtung drehbar antreibbar ist. Von der Schwenkvorrichtung ist eine ebenfalls nicht dargestellte Klappe schwenkbar.

Weiterhin ist koaxial zur Drehachse 1 eine Ringspule 7 angeordnet, die bei Bestromung ein axiales Magnetfeld erzeugt, durch das der Anker 4, 4', 4", 4"' axial bewegbar ist.

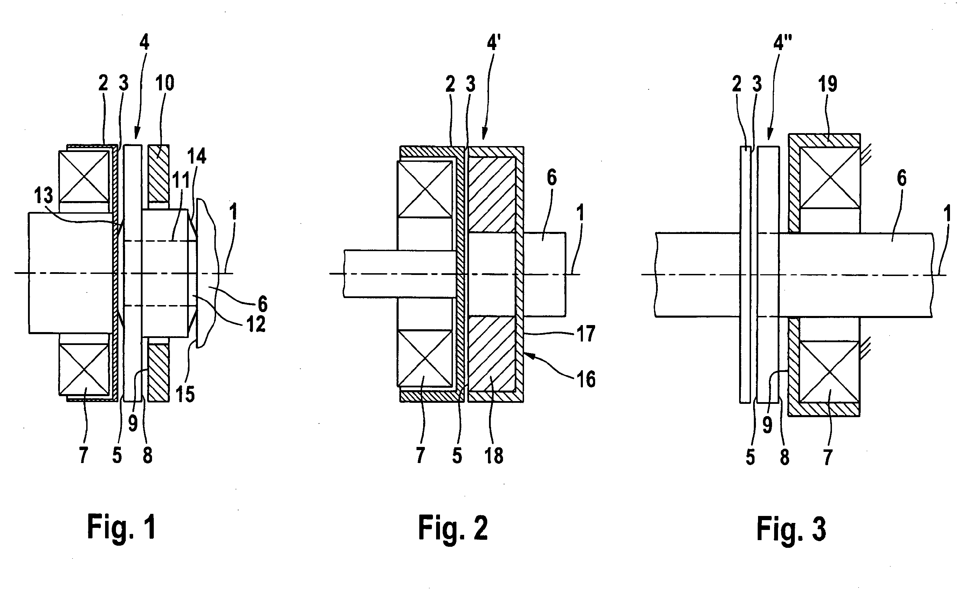

Bei dem Ausführungsbeispiel der Figur 1 besitzt der scheibenartige Anker 4 auf seiner dem Rotor 2 abgewandten Seite eine dritte Kupplungsfläche 8, der in einem axialen Abstand eine feststehende vierte Kupplungsfläche 9 gegenüberliegt, die an einem ringartigen Bauteil 10 aus einem ferromagnetischen Werkstoff ausgebildet ist.

Der Anker 4 besitzt eine koaxiale Führungsbohrung 11, mit der er verdrehfest aber axial verschiebbar auf einem Ende 12 der Antriebswelle 6 sitzt.

Über eine erste Tellerfeder 13 ist der Anker 4 axial an dem Rotor 2 und über eine zweite Tellerfeder 14 an einer Stufe 15 der Antriebswelle 6 federn abgestützt.

Der Anker 4 ist ein axial magnetisierter permanent magnetischer Anker 4, der eine Anziehkraft zu dem ringartigen Bauteil 10 besitzt.

Die Ringspule 7 ist auf der dem Anker 4 abgewandten Seite des Rotors 2 angeordnet.

Bei nicht bestromter Ringspule 7 wird der Anker 4 durch die einander entgegenwirkenden etwa gleich starken Tellerfedern 13 und 14 in einer Mittellage gehalten, in der er weder an dem Rotor 2 noch an dem Bauteil 10 in Anlage ist.

Damit kann die Klappe weitgehend widerstandsfrei manuell verschwenkt werden.

Erfolgt eine Bestromung der Ringspule in eine erste Bestromungsrichtung, wird der Anker 4 von dem dabei erzeugten Magnetfeld mit seiner zweiten Kupplungsfläche 5 in Anlage an die erste Kupplungsfläche 3 gezogen, so daß eine reibschlüssige Verbindung zwischen diesen beiden Kupplungsflächen 3 und 5 entsteht. Dabei ist eine Drehverbindung von dem Elektromotor zur Antriebswelle 6 hergestellt, so daß von dem Elektromotor die Klappe schwenkbar antreibbar ist.

Durch Beendigung der Bestromung der Ringspule 7 bewegen die Tellerfedern 13 und 14 ggf. durch einen kurzen Stromimpuls auf die Ringspule in eine zweite Bestromungsrichtung unterstützt den Anker 4 wieder in seine Mittellage.

Wird die Ringspule 7 in die zweite Bestromungsrichtung bestromt, wird der Anker 4 von dem dabei erzeugten Magnetfeld mit seiner dritten Kupplungsfläche in Anlage an die vierte Kupplungsfläche 9 des ringartigen Bauteils 10 bewegt, so daß zwischen diesen beiden Kupplungsflächen 8 und 9 eine reibschlüssige Verbindung entsteht, die auch nach Beendigung der Bestromung der Ringspule 7 durch die Magnetkraft des dauermagnetischen Ankers 4 aufrechterhalten bleibt. Dabei wird die Klappe in der gerade eingenommenen Stellung gehalten, ohne daß eine Bestromung der Ringspule 7 nötigt ist.

Ein kurzer Stromimpuls in die erste Bestromungsrichtung bringt den Anker 4 wieder in seine Mittelstellung.

Bei dem Ausführungsbeispiel der Figur 2 besitzt der Anker 4' ein topfartiges Aluminiumgehäuse 16, an dessen Boden 17 die Antriebswelle 6 angeordnet ist. Die Öffnung des Aluminiumgehäuses 16 ist zum Rotor 2 gerichtet. In das Aluminiumgehäuse 16 ist ein axial magnetisierter Permanentmagnet 18 mit einer Anziehkraft zum Rotor eingesetzt. Auf der dem Anker 4 abgewandten Seite des Rotors 2 ist die Ringspule 7 angeordnet.
Wird die Ringspule 7 in eine erste Stromrichtung bestromt, wird der Anker 4' von dem dabei erzeugten Magnetfeld mit seiner zweiten Kupplungsfläche 5 an die erste Kupplungsfläche 3 des Rotors 2 angezogen, so daß eine reibschlüssige Verbindung zwischen diesen beiden Kupplungsflächen 3 und 5 entsteht.

Damit ist eine Drehverbindung von dem Elektromotor zur Antriebwelle 6 hergestellt, so daß von dem Elektromotor die Klappe schwenkbar antreibbar ist.

Bei Beendigung der Bestromung der Ringspule 7 in die erste Bestromungsrichtung bleibt die reibschlüssige Verbindung zwischen der ersten und zweiten Kupplungsfläche 3 und 5 aufgrund der Magnetkraft des Permanentmagneten 18 des Ankers 4' bestehen, so daß die Klappe ohne Bestromung der Ringspule 7 aufgrund der Selbsthemmung des Elektromotors in ihrer eingenommenen Stellung gehalten wird.

Soll eine manuelle Bewegung der Klappe erfolgen, wird die Ringspule 7 in ihre zweite Bestromungsrichtung bestromt, so daß sich die Magnetfelder der Ringspule 7 und des Permanentmagneten 18 abstoßen. Damit hebt der Anker 4' von dem Rotor 2 ab und die Klappe kann manuell verschwenkt werden.

Bei dem Ausführungsbeispiel der Figur 3 besteht der Rotor 2 aus einem nicht ferrromagnetischen Werkstoff. Auf der dem Rotor 2 abgewandten Seite des scheibenartigen Ankers 4" ist koaxial die Ringspule 7 angeordnet.

Der Anker 4" ist ein axial magnetisierter permanentmagnetische Anker 4", dessen Anziehkraft axial zu der mit einem feststehenden ferrromagnetischen Spulengehäuse 19 versehenen Ringspule 7 hin wirkt.

Bei nicht bestromter Ringspule 7 wird der Anker 4" durch die Magnetkraft des Permanentmagneten 18 mit seiner der Ringspule 7 zugewandten dritten Kupplungsfläche 8 in Anlage an die ihr zugewandte vierte Kupplungsfläche 9 des Spulengehäuses 19 gezogen, so daß eine reibschlüssige Verbindung zwischen diesen beiden Kupplungsflächen 8 und 9 entsteht.

Damit wird die Klappe in der jeweils eingenommenen Stellung ohne Bestromung der Ringspule 7 gehalten.

Wird die Ringspule 7 in eine erste Stromrichtung bestromt, erzeugt sie ein den Anker 4" abstoßendes Magnetfeld, so daß der Anker 4" mit seiner zweiten Kupplungsfläche 5 in Anlage an die erste Kupplungsfläche 3 des Rotors 2 gelangt und eine reib- oder formschlüssige Verbindung zwischen diesen beiden Kupplungsflächen 3 und 5 erzeugt.

Damit ist eine Drehverbindung von dem Elektromotor zur Antriebswelle 6 hergestellt, so daß von dem Elektromotor die Klappe schwenkbar antreibbar ist.

Wird die Ringspule 7 getaktet oder mit geringerer Stromstärke in die erste Stromrichtung bestromt, hebt der Anker 4" durch die dabei erzeugten Magnetfelder der Ringspule 7 zwar von dem Spulengehäuse 19 ab, gelangt aber nicht zur Anlage an dem Rotor 2. Damit kann die Klappe manuell frei verschwenkt werden.

Erfolgt eine Bestromung der Ringspule 7 in eine zweite Stromrichtung, so erfolgt eine Verstärkung der reibschlüssigen Verbindung zwischen der dritten und vierten Kupplungsfläche 8 und 9. Es ist aber ausreichend, wenn die Ringspule 7 nur in die erste Stromrichtung bestrombar ist.

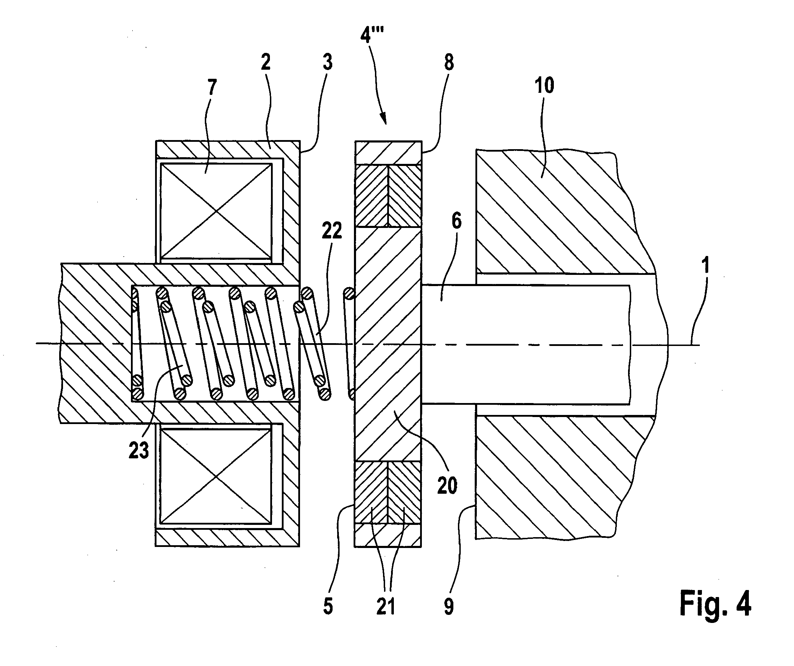

Bei dem Ausführungsbeispiel der Figur 4 besteht der Anker 4'" aus einem Träger 20 nicht ferromagnetischen Werkstoffs, in den axial magnetisierte Permanentmagnete 21 eingesetzt sind. An dem Träger 20 ist die Antriebswelle 6 fest angeordnet.

Die Ringspule 7 ist auf der dem Anker 4'" abgewandten Seite des Rotors 2 angeordnet.

Auf der dem Rotor 2 abgewandten Seite des Ankers 4'" ist koaxial ein feststehendes ringartiges Bauteil 10 aus einem ferromagnetischen Werkstoff angeordnet, zu dem hin die Permanentmagnete 21 des Ankers 4'" eine Anziehkraft besitzen.

An dem Rotor 2 sind zwei koaxial angeordnete Schraubendruckfedern 22 und 23 unterschiedlichen Durchmessers abgestützt, von denen die eine größere Länge aufweisende erste Schraubendruckfeder 22 mit ihrem anderen Ende an dem Anker 4"' in Anlage ist.

Wird die Ringspule 7 in eine erste Stromrichtung bestromt, wird ein Magnetfeld erzeugt, das den Anker 4'" unter Kompression der Schraubendruckfedern 22 und 23 zur Anlage an den Rotor 2 bewegt.

Dabei gelangt die Kupplungsfläche 5 des Ankers 4'" in Anlage an die erste Kupplungsfläche 3 des Rotors 2, so daß eine reibschlüssige Verbindung zwischen diesen beiden Kupplungsflächen 3 und 4 entsteht.

Damit ist eine Drehverbindung von dem Elektromotor zur Antriebswelle 6 hergestellt, so daß von dem Elektromotor die Klappe schwenkbar antreibbar ist.

Erfolgt eine Bestromung der Ringspule 7 mit einer geringeren Stromstärke in die erste Stromrichtung, kann die Magnetkraft der Ringspule 7 nur noch die Kraft der ersten Schraubendruckfeder 22 überwinden, nicht aber den durch die zweite Schraubendruckfeder 23 erzeugten stufigen Anstieg des Verlaufs der Gesamtkraft beider Schraubendruckfedern 22 und 23.

Damit gelangt der Anker 4'" in eine Mittelstellung, in der die Klappe manuell bewegbar ist.

Bei Nichtbestromung der Ringspule 7 gelangt ggf. mit Unterstützung eines kurzen Stromimpulses in eine zweite Stromrichtung der Anker 4'" mit seiner dritten Kupplungsfläche 8 in Anlage an eine vierte Kupplungsfläche 9 des ringartigen Bauteils 10, so daß eine reibschlüssige Verbindung zwischen diesen beiden Kupplungsflächen 8 und 9 entsteht.

Damit wird die Klappe in der gerade eingenommenen Stellung ohne Bestromung der Ringspule 7 gehalten.

### Bezugszeichenliste

- 1: Drehachse
- 2: Rotor
- 3: erste Kupplungsfläche
- 4: Anker
- 4': Anker
- 4": Anker
- 4"': Anker
- 5: zweite Kupplungsfläche
- 6: Antriebswelle
- 7: Ringspule
- 8: dritte Kupplungsfläche
- 9: vierte Kupplungsfläche
- 10: ringartiges Bauteil
- 11: Führungsbohrung
- 12: Ende
- 13: erste Tellerfeder
- 14: zweite Tellerfeder
- 15: Stufe
- 16: Aluminiumgehäuse
- 17: Boden
- 18: Permanentmagnet
- 19: Spulengehäuse
- 20: Träger
- 21: Permanentmagnet
- 22: erste Schraubendruckfeder
- 23: zweite Schraubendruckfeder

## Patentansprüche

1. Antrieb zum Verschwenken einer an einer Karosserie eines Fahrzeugs um eine Schwenkachse schwenkbar angeordneten Klappe, mit einem reversierbar ansteuerbaren Antriebsmotor, durch den über einen Antriebsstrang des Antriebs ein Antriebsrad einer Schwenkvorrichtung drehbar antreibbar ist, von der die Klappe schwenkbar ist, wobei in dem Antriebsstrang eine Kupplung zum Unterbrechen des Antriebsstrangs und in Antriebsrichtung hinter der Kupplung eine Bremse zum Bremsen des hinter der Kupplung befindlichen Teils des Antriebsstrangs angeordnet ist und wobei von dem Antriebsmotor ein Rotor (2) um eine Drehachse (1) drehbar antreibbar ist, mit einer axial zur Drehachse (1) angeordneten, bestrombaren Spule, von der ein axiales Magnetfeld erzeugbar ist, mit einem axial zu Rotor (2) und Spule bewegbar angeordneten, von dem Magnetfeld beeinflußbaren Anker (4, 4', 4", 4"'), der drehfest mit dem Antriebsrad verbunden ist, wobei der Anker (4, 4', 4", 4"') durch das Magnetfeld eine form- und/oder reibschlüssige Verbindung zwischen Rotor (2) und Anker (4, 4', 4", 4"') erzeugen in Anlage an den Rotor (2) bewegbar ist, **dadurch gekennzeichnet, daß** der Anker (4, 4', 4", 4"') ein axial magnetisierter permanentmagnetischer (4, 4', 4", 4"') Anker ist.

2. Antrieb nach Anspruch 1, d adu rch gekennzeichnet, daß der Anker (4, 4", 4"') durch das Magnetfeld entgegen einer Kraft in Anlage an den Rotor (2) bewegbar ist.

3. Antrieb nach Anspruch 2, **dadurch gekennzeichnet, daß** der Verlauf der Kraft in seinem mittleren Bereich einen stufigen Anstieg besitzt.

4. Antrieb nach einem der Ansprüche 2 und 3, **dadurch gekennzeichnet, daß** die Kraft die Kraft einer oder mehrerer Federn, insbesondere einer oder mehrerer Druckfedern ist.

5. Antrieb nach Anspruch 4, **dadurch gekennzeichnet, daß** die Druckfedern Tellerfedern (13) sind.

6. Antrieb nach Anspruch 4, **dadurch gekennzeichnet, daß** die Druckfedern Schraubendruckfedern (22, 23) sind.

7. Antrieb nach einem der vorhergehenden Ansprüche, **dadurch gekennzeichnet, daß** der Anker (4"') aus einem Träger (20) nicht ferromagnetischen Werkstoffs besteht, in den Permanentmagnete (21) eingesetzt sind.

8. Antrieb nach einem der vorhergehenden Ansprüche, **dadurch gekennzeichnet, daß** der Rotor (2) aus einem ferromagnetischen Werkstoff besteht und der Anker (4') eine Anziehkraft zum Rotor (2) besitzt.

9. Antrieb nach einem der Ansprüche 1 bis 7, **dadurch gekennzeichnet, daß** axial auf der dem Rotor (2) abgewandten Seite des Ankers (4, 4", 4"') ein feststehendes Bauteil (10) aus einem ferromagnetischen Werkstoff angeordnet ist, gegen das der Anker (4, 4", 4"') eine form- und/oder reibschlüssige Verbindung zwischen dem feststehenden Bauteil (10) und dem Anker (4, 4", 4"') erzeugend in Anlage bewegbar ist, wobei der Anker (4, 4", 4"') eine Anziehkraft zu dem feststehenden Bauteil (10) besitzt.

10. Antrieb nach den Ansprüchen 2 und 8, **dadurch gekennzeichnet, daß** der Anker (4) von einer der ersten Kraft entsprechenden entgegengerichteten zweiten Kraft beaufschlagt ist.

11. Antrieb nach Anspruch 10, **dadurch gekennzeichnet, daß** zweite Kraft die Kraft einer oder mehrerer Federn, insbesondere einer oder mehrerer Druckfedern ist.

12. Antrieb nach Anspruch 11, **dadurch gekennzeichnet, daß** die Druckfedern Tellerfedern (14) oder Schraubendruckfedern sind.

13. Antrieb nach einem der vorhergehenden Ansprüchen, **dadurch gekennzeichnet, daß** der Antriebsmotor ein Elektromotor ist.

14. Antrieb nach einem der vorhergehenden Ansprüchen, **dadurch gekennzeichnet, daß** der Antriebsmotor ein nicht selbsthemmender Antriebsmotor ist.

## Claims

1. Drive for swivelling of a flap, which is arranged on the bodywork of a vehicle such that it can swivel around a swivelling axis, having a reversible drive motor by means of which a drive wheel of a swivelling apparatus can be rotated via a drive train of the drive, by which swivelling apparatus the flap can be swivelled, with a clutch being arranged in the drive train in order to interrupt the drive train, and a brake being arranged downstream from the clutch in the drive direction in order to brake that part of the drive train which is located downstream from the clutch, and with a rotor (2) being able to be driven by the drive motor such that it can rotate about a rotation axis (1), having a coil through which current can flow, which is arranged axially with respect to the rotation axis (1) and can produce an axial magnetic field, having an armature (4, 4', 4", 4"') which is arranged such that it can move axially with respect to the rotor (2) and coil, can be influenced by the magnetic field and is connected to the drive wheel such that they rotate together, wherein the armature (4, 4', 4", 4"') can be moved into contact with the rotor (2) by the magnetic field, producing an interlocking connection and/or a friction connection between the rotor (2) and the armature (4, 4', 4", 4'"), **characterized in that** the armature (4, 4', 4" , 4"') is a permanent-magnet armature (4, 4', 4", 4"') which is magnetized axially.

2. Drive according to Claim 1, **characterized in that** the armature (4, 4", 4"') can be moved into contact with the rotor (2) by the magnetic field against a force.

3. Drive according to Claim 2, **characterized in that** the force profile has a step rise in its central area.

4. Drive according to one of Claims 2 and 3, **characterized in that** the force is the force of one or more springs, in particular of one or more compression springs.

5. Drive according to Claim 4, **characterized in that** the compression springs are cup springs (13).

6. Drive according to Claim 4, **characterized in that** the compression springs are helical compression springs (22, 23).

7. Drive according to one of the preceding claims, **characterized in that** the armature (4"') comprises a mount (20) composed of non-ferromagnetic material, into which the permanent magnets (21) are inserted.

8. Drive according to one of the preceding claims, **characterized in that** the rotor (2) is composed of a ferromagnetic material, and there is an attraction force between the armature (4') and the rotor (2).

9. Drive according to one of Claims 1 to 7, **characterized in that** a stationary component (10) composed of a ferromagnetic material is arranged axially on that side of the armature (4, 4", 4"') which faces away from the rotor (2), against which stationary component (10) the armature (4, 4", 4"') can be moved into contact, producing an interlocking connection and/or a friction connection between the stationary component (10) and the armature (4, 4", 4"'), with there being an attraction force between the armature (4, 4", 4"') and the stationary component (10).

10. Drive according to Claims 2 and 8, **characterized in that** a second force, which is in the opposite direction to but corresponds to the first force, is applied to the armature (4).

11. Drive according to Claim 10, **characterized in that** the second force is the force of one or more springs, in particular of one or more compression springs.

12. Drive according to Claim 11, **characterized in that** the compression springs are cup springs (14) or helical compression springs.

13. Drive according to one of the preceding claims, **characterized in that** the drive motor is an electric motor.

14. Drive according to one of the preceding claims, **characterized in that** the drive motor is a non-self-locking drive motor.

## Revendications

1. Entraînement pour pivoter une trappe disposée sur une carrosserie d'un véhicule de manière pivotante autour d'un axe de pivotement, comprenant un moteur d'entraînement pouvant être commandé de manière réversible, au moyen duquel une roue d'entraînement d'un dispositif de pivotement peut être entraînée de manière rotative par le biais d'une chaîne cinématique de l'entraînement, la trappe pouvant être pivotée par le dispositif de pivotement, un embrayage pour interrompre la chaîne cinématique étant disposé dans la chaîne cinématique et un frein pour freiner la partie de la chaîne cinématique se trouvant derrière l'embrayage étant disposé derrière l'embrayage dans la direction d'entraînement, et un rotor (2) pouvant être entraîné de manière rotative par le moteur d'entraînement autour d'un axe de rotation (1), comprenant une bobine pouvant être alimentée en courant électrique disposée axialement par rapport à l'axe de rotation (1), un champ magnétique axial pouvant être généré par la bobine, comprenant un induit (4, 4', 4", 4"') disposé de manière déplaçable axialement par rapport au rotor (2) et à la bobine et pouvant être influencé par le champ magnétique, lequel induit est relié de manière solidaire en rotation à la roue d'entraînement, l'induit (4, 4', 4", 4"') pouvant être déplacé au moyen du champ magnétique jusqu'à être en appui contre le rotor (2), en générant une liaison par engagement par complémentarité de formes et/ou par friction entre le rotor (2) et l'induit (4, 4', 4", 4"'), **caractérisé en ce que** l'induit (4, 4', 4", 4"') est un induit (4, 4', 4", 4"') magnétisé axialement à aimantation permanente.

2. Entraînement selon la revendication 1, **caractérisé en ce que** l'induit (4, 4", 4"') peut être déplacé par le champ magnétique à l'encontre d'une force jusqu'à être en appui contre le rotor (2).

3. Entraînement selon la revendication 2, **caractérisé en ce que** l'allure de la force présente dans sa région centrale une augmentation graduelle.

4. Entraînement selon l'une quelconque des revendications 2 et 3, **caractérisé en ce que** la force est la force d'un ou de plusieurs ressorts, en particulier d'un ou de plusieurs ressorts de compression.

5. Entraînement selon la revendication 4, **caractérisé en ce que** les ressorts de compression sont des ressorts Belleville (13).

6. Entraînement selon la revendication 4, **caractérisé en ce que** les ressorts de compression sont des ressorts de compression hélicoïdaux (22, 23).

7. Entraînement selon l'une quelconque des revendications précédentes, **caractérisé en ce que** l'induit (4"') est constitué d'un support (20) en matériau non ferromagnétique, dans lequel support sont insérés des aimants permanents (21).

8. Entraînement selon l'une quelconque des revendications précédentes, **caractérisé en ce que** le rotor (2) est constitué d'un matériau ferromagnétique et il existe (4') une force d'attraction entre l'induit et le rotor (2).

9. Entraînement selon l'une quelconque des revendications 1 à 7, **caractérisé en ce qu'**un composant fixe (10) en un matériau ferromagnétique est disposé axialement du côté de l'induit (4, 4", 4"') opposé au rotor (2), contre lequel composant fixe l'induit (4, 4", 4"') peut être amené en appui, en générant une liaison par engagement par complémentarité de formes et/ou par friction entre le composant fixe (10) et l'induit (4, 4", 4"'), une force d'attraction existant entre l'induit (4, 4", 4"') et le composant fixe (10).

10. Entraînement selon les revendications 2 et 8, **caractérisé en ce que** l'induit (4) est sollicité par une deuxième force opposée correspondant à la première force.

11. Entraînement selon la revendication 10, **caractérisé en ce que** la deuxième force est la force d'un ou de plusieurs ressorts, en particulier d'un ou de plusieurs ressorts de compression.

12. Entraînement selon la revendication 11, **caractérisé en ce que** les ressorts de compression sont des ressorts Belleville (14) ou des ressorts de compression hélicoïdaux.

13. Entraînement selon l'une quelconque des revendications précédentes, **caractérisé en ce que** le moteur d'entraînement est un moteur électrique.

14. Entraînement selon l'une quelconque des revendications précédentes, **caractérisé en ce que** le moteur d'entraînement est un moteur d'entraînement non autobloquant.
